# EUROPEAN PATENT APPLICATION

(11) **EP 2 164 002 A1**
(43) Date of publication of application: **17.03.2010**
(21) Application number: 08016317.3
(22) Date of filing: 16.09.2008
(51) Int. Cl.: G06F 17/30, G06F 11/14

(54) **Method for archiving data stored in a database by partition rotation**

(71) Applicant: Siemens Aktiengesellschaft, 80333 München (DE)
(72) Inventor: Olmino, Paolo, 16151 Genova (IT)
(74) Representative: Fischer, Michael

(57) **Abstract**

It is an objective of the present invention to provide a method for the storage of data in an MES environment which is time-efficient and allows a continuous access to the data saved in the database.

These objectives are achieved according to the present invention by a method for archiving data stored in a database within an MES environment, wherein data stemming from the manufacturing execution system is arriving continuously at the database, said method comprising the steps of:
a) dividing the database into a number of at least two partitions,
b) assigning to each of the at least two partitions an operational status information, wherein the operational status information is representing a current data handling routine executed at the respective partition;
c) one of the at least two partitions is scheduled to be the current storage partition as the current data handling routine;
d) another of the at least two partitions is scheduled to be the current data archiving partition as the current data handling routine,
e) changing the afore-mentioned data handling routines cyclically along the at least two partitions by rotating the operational status information cyclically.

This method allows applying a clear and persistent partitioning policy which makes it extremely affordable with respect to the adaptation of existing code. The database is continuously accessible and the size of the partitions can be easily handled by recycling just one of the partitions after its data has been archived.

## Description

The invention relates to a method for archiving data stored in a database by partition rotation especially in the technical field of manufacturing execution systems.

In manufacturing execution systems (MES) environments, an amount of data that has to be managed in databases increases rapidly. This fact makes it necessary to find a solution to transfer large groups of data from a transactional processing database to different storage areas like archiving storage media or stage areas where other processes follow. The solution has to be time-effective and easy to be applied to existing applications.

A most widespread solution consists in using simple data manipulation languages to find a hierarchy of the data to be moved to the storage media, copying the data to the storage media and deleting it from its original position. This technique causes data fragmentation and, during the deletion of the data, requires the database to apply many locks on data chunks to be deleted. Thus, this can lead to a long lasting operation, wherein the database is hardly accessible.

Several database management systems (DBMS) provide an ability to partition the data which for example is contained in a table, into different partitions using a partitioning function. In particular cases, some basic operations on these partitions can be performed in a fast manner, whereas merging and splitting the data are only possible under certain constraints. A transfer of a partition to the storage medium is usually straightforward.

A technical solution which is applied consists in partitioning the data, using as partitioning criterion a creation date of a data set. In a process of moving the data set created before a certain date to the storage area, an original partition is split into two partitions of which a first partition is the one to be archived. Thereby, the splitting is time consuming and should be avoided.

Moreover, in order to create a precise partitioning function, database administrators have to take into account a rapidly increasing data volume in the database, to decide upon a size of the partitions such that the partition can be kept up conveniently with the new data.

It is therefore an objective of the present invention to provide a method for the storage of data in an MES environment which is time-efficient and allows a continuous access to the data saved in the database. Further, tracking of data has to be persistent at all time.

These objectives are achieved according to the present invention by a method for archiving data stored in a database within an MES environment, wherein data stemming from the manufacturing execution system is arriving continuously at the database, said method comprising the steps of:
a) dividing the database into a number of at least two partitions,
b) assigning to each of the at least two partitions an operational status information, wherein the operational status information is representing a current data handling routine executed at the respective partition;
c) one of the at least two partitions is scheduled to be the current storage partition as the current data handling routine;
d) another of the at least two partitions is scheduled to be the current data archiving partition as the current data handling routine,
e) changing the afore-mentioned data handling routines cyclically along the at least two partitions by rotating the operational status information cyclically.

This method allows applying a clear and persistent partitioning policy which makes it extremely affordable with respect to the adaptation of existing code. The database is continuously accessible and the size of the partitions can be easily handled by recycling just one of the partitions after its data has been archived to a separate data archive.

With respect to the cycle of the rotation, some of the MES system delivers a rather constant flow of new data to be stored. In this case, it is appropriate to assign a predetermined static period of time for the cycle of the rotation. Even the process of establishing the rotation is therefore rather simple, since after the expiration of the predetermined static period the data handling routines are rotated over the existing partitions.

Under certain circumstances, the volume of the data emerging from the operation of the MES shows rather bigger fluctuations. In that case, it is appropriate to determine the rotation pace in the dependency of dynamic or customized criterions. A preferred criterion in this regard is, of course, the amount of data stored to the partition currently scheduled to be the current storage partition. Further, according to a preferred embodiment of the present invention a threshold is determined for the amount of data passed to the partition currently scheduled to be the current storage partition. When this threshold is close to be achieved or is currently achieved, the next rotation takes place and a recycled partition will take over the part from the respective previous one.

In a further preferred example of the present invention, a further data handling routine can be defined. The data handling routine can be assigned to one of at least three partitions defining this partition to be idle after being scheduled as current storage partition and before being scheduled as current data archiving partition.

Further preferred embodiments of the present invention reside in the remaining dependent claims.

Preferred embodiments of the present invention are hereinafter described with reference to the attached drawing which depicts in:
- Fig. 1: a typical distribution of the time fractions required for the data storage in an MES data management system according to the prior art;
- Fig. 2: a schematic illustration of a state of the art partitioning technique;
- Fig. 3: a schematic illustration on the rolling partitioning concept according to the present invention; and
- Fig. 4: a schematic illustration of the concept according to figure 3 over four cycles.

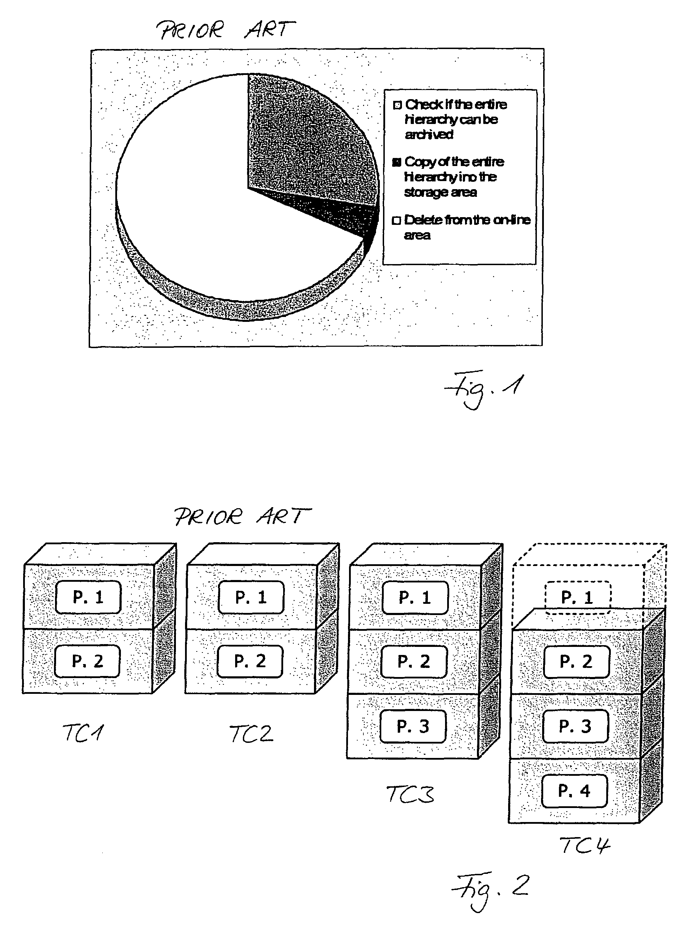

Figure 1 illustrates a typical distribution of the time fractions required for the data storage in an MES data management system according to the prior art. This kind of MES data management systems are using simple data manipulation language to find the hierarchy of data which has to be moved to a storage area. Approximately, one quarter of the total time is dedicated to the check whether an entire hierarchy of data can be archived. A comparably small time frame is required to copy the identified hierarchy into the storage area. Unfortunately, almost 2/3 of the total time is consumed to delete the hierarchy of data from the current data storage which leads to the drawback of a significant fragmentation of the data. During the deletion of the archived hierarchy of data tremendous efforts have to be performed in order to secure the persistence of the remaining data by applying a bunch of locks the respective data. This data integrity implication causes usually to a long lasting operation during which access to the data is allowed to the workshop process.

Figure 2 shows a typical illustration on the state-of-the-art partitioning technique. During a first time cycle TC1 two partitions P.1 and P.2 exist. All data is written to the first partition P.1. During the second time cycle TC2 the data is written to the second partition P.2 and so on. Under benevolent circumstances some basic data operations on these partitions can be done in timely fashion wherein the merging and splitting to the partitions are only possible under specific constraints. Once a partition is defined to be stored to the storage area abroad, this process can be done quiet straightforward. Usually, the partitioning of the data is using as the partitioning criterion the creation date of the data. When the data having a creation date before a predetermined date must be moved to the storage area, the first partition P.1 is split into the two partitions P.1 and P.2 and so on. The former partition is then the partition to be archived. Each time the database management system is splitting the current partition, the splitting is a time-consuming process causing access locks to the database and the fragmentation of the data is increasing. Moreover, database administration has to create a precise partitioning function by taking into account the increasing amount of ratio of data in the database that has to be archived and to decide upon the size of the partitions in order to keep up with the new incoming data.

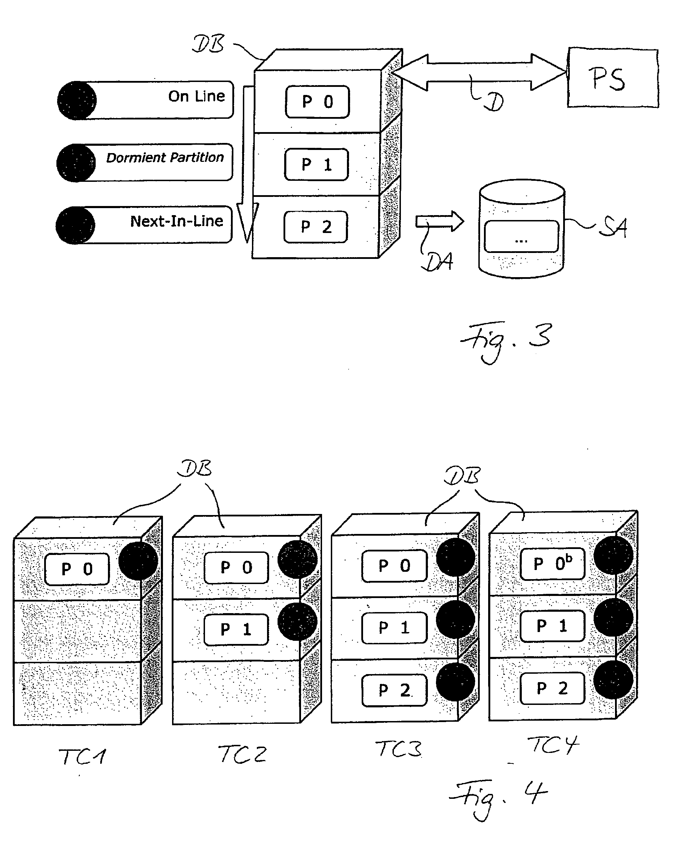

Figure 3 illustrates now the rolling partition concept according to the present invention. In general terms, the solution provides a cyclic recycling of already existing partitions. In particular, the database can be preferably divided into three partitions P0, P1 and P2 as illustrated in Figure 3. One partition P0 is the current online database which exchanges process data D with a production site PS managed by a manufacturing execution system. The second partition P1 is kept during the same time cycle as a latent partition wherein data transactions with the production site PS do not occur. The third partition P2 is the so-called next-in-line partition which is currently transferring all its content as data to be archived DA to a data storage area SA (archive). Therefore, the partitioning policy is very clear and helpful without blowing-up the complexity of the partitioning structure. The adaptations of the existing data management code to this rolling partition concept are extremely simple.

As depicted in Figure 4, the rolling partition concept uses a database DB which is conceptually divided into three partitions (n=3). For every partition P0, P1 and P2 a partitioning function is defined by the definition of a new integer field called partition number and which holds the current partition number of the record (partition number between 0 and n-1). The default value of the partitions P0 to P2 is set to the value as indicated by the numbering of the partitions P0, P1 and P2. An ad-hoc table is defined which holds the value for the online partition (for instance 0). During the time cycle TC1 the partition P0 is the online partition. All new data records are now automatically inserted into the partition having the value "0" (P0). At a given moment (i.e. here the end of the first time cycle TC1), the value in the ad-hoc table is incremented to "1". Any new record during the second time cycle TC2 is now automatically inserted into the partition P1 which is now during the second time cycle TC2 the online partition. Any preceding records are maintained in the partition P0 which is now the latent or dormant partition. After the expiration of the second time cycle TC2, the value in the ad-hoc table is incremented again and has now the value "2". Now, any new record is inserted during the third time cycle TC3 into the partition P2 which is now the online partition. Preceding records are maintained in the partition P1 which is now the off-line dormant partition. The oldest records are currently in the partition P0 which is now ready for archiving its data during the third time cycle TC3. Again, at the end of a time cycle, here the third time cycle TC3, the value in the ad-hoc table is incremented, and the value is now conveniently reset to "0". The old data in partition P0 has been archived during the preceding time cycle (TC3) and any new record is now heading for the partition P0. The data in partition P1 is now archived during the present time cycle TC4 and the data in the partition P2 is offline as long as this partition P2 is the dormant partition. The general terms, the rolling cycle is repeated after the expiration of the third time cycle TC3. Nevertheless, the online partition P0 is now marked as partition P0^{b} in order to indicate that the original partition P0 is now been recycled for the first time.

In slow system (slow with respect to the archiving speed), more than three partitions may exist implicating that one of the partition is the online partition and one partition is the current data archiving partition. Any other partition is just a dormant offline partition. In systems having a direct flux from online to storing in the archive, the number n can be set to "2".

The major advantage of the present rolling partition concept is the simplicity of the model. In fact, the database administration has to meet only a few decisions just to understand the pace from the online production site PS to the storage area SA. No further administrative operations are required. With this partition concept it is guaranteed that the size and complexity of the partitions and the fragmentation of the data will not grow during the running process. Another advantage of this concept, of course, resides in the excellent performances in dividing date into data hierarchies. There does not exist a need to compare data creation dates to find logical relationships but only looking for all records in the data storage area SA which are marked by the precise respective partition number.

## Claims

1. Method for archiving data (DA) stored in a database (DB) within an MES environment, wherein data stemming from the manufacturing execution system (PS) is arriving continuously at the database (DB), comprising the steps of:
a) dividing the database (DB) into a number of at least two partitions (P0, P1, P2),
b) assigning to each of the at least two partitions (P0, P1, P2) an operational status information, wherein the operational status information is representing a current data handling routine executed at the respective partition (P0, P1, P2);
c) one of the at least two partitions (P0) is scheduled to be the current storage partition as the current data handling routine;
d) another of the at least two partitions is scheduled to be the current data archiving partition (P2) as the current data handling routine, and
e) changing the afore-mentioned data handling routines cyclically along the at least two partitions by rotating the operational status information cyclically.

2. Method according to claim 1, whereby the cycle for the rotation is assigned statically.

3. Method according to claims 1, whereby the cycle for the rotation is assigned dynamically.

4. Method according to claim 3, whereby the cycle for the rotation depends on the amount of data stored to the partition currently scheduled to be the current storage partition.

5. Method according to claim 3 or 4, whereby a threshold is determined for the amount of data passed to the partition currently scheduled to be the current storage partition.

6. Method according to any of the preceding claims 1 to 5, wherein a further data handling routine can be assigned to one of at least three partitions defining this partition to be idle after being scheduled as current storage partition and before being scheduled as current data archiving partition.
